# EUROPEAN PATENT APPLICATION

(11) **EP 4 525 075 A1**
(43) Date of publication of application: **19.03.2025**
(21) Application number: 23198077.2
(22) Date of filing: 18.09.2023
(51) Int. Cl.: H01M 4/136, H01M 4/1397, H01M 4/36, H01M 4/38, H01M 4/58, H01M 4/62, H01M 10/052

(54) **MIXED ION-ELECTRON CONDUCTIVE TRANSITION LAYER INDUCED BY THE IRRADIATION OF CHALCOGENIDE BASED MATERIALS**

(71) Applicant: Theion GmbH, 12487 Berlin (DE)
(72) Inventor: Kumar, Pushpendra, 12487 Berlin (DE); Slavik, Marek, 12487 Berlin (DE); Puget, Marin, 12487 Berlin (DE); Waidha, Aamir Iqbal, 12487 Berlin (DE); Pehl, Thomas, 12487 Berlin (DE); Martin, Andréa Joris Quentin, 12487 Berlin (DE); Wutthiprom, Juthaporn, 12487 Berlin (DE)
(74) Representative: Paustian & Partner Patentanwälte mbB

(57) **Abstract**

The present invention relates to an electrode and/or cathode stabilized by a transition layer, comprising:
(a) a porous chalcogenide-based electrode, more desirably sulfur, comprising of predominantly crystalline allotropes within the core;
(b) at least one of a glass, polymeric and amorphous chalcogenide, more desirably sulfur allotropes present within the transition layer and/or shell covering the surface of the active electrode material, the transition layer comprising of a two-dimensional (2D) material, covalently bonded between said 2D material and the chalcogenide, more desirably sulfur of the electrode material, and 12 weight % or less, based on the total weight of the coated electrode, of polymeric sulfur; and
(c) a coating layer on top of the transition layer said coating layer comprising a 2D material,
(d) a presence of density gradient between the crystalline core and glass/polymeric/amorphous shell,
(e) an electrode in which the volume of crystalline allotrope present within the inner voids represents a buffer volume utilized to compensate the volumetric fluctuation during battery cycling,
(f) a chalcogenide electrode, more desirably a sulfur-rich electrode, where the electrode active mass consists of binary and or ternary dopant such as selenium, tellurium having composition (SeₓS_{y}), (TeₓS_{y}), (TeₓS_{y}Se_{z}), wherein the mass content of sulfur in the cathode is above 50% per weight of the total chalcogenide content, wherein
(g) the coated electrode and/or cathode, comprising at least one sulfur allotrope that is doped with a chalcogenide, a halogen, or a mixture thereof, more desirably comprised from 0.001 to 50 weight % of the chalcogenide, halogen or mixture thereof, based on the total weight of the sulfur allotrope, such as 0.01 to 49 weight %, 0.1 to 45 weight %, 0.5 to 44 weight % or 0.75 to 43 weight %, such as 1 weight %, 1.5 weight % or 2 weight % of the chalcogenide, halogen or mixture thereof.

## Description

### TECHNICAL FIELD

The present disclosure generally relates to an electrode and/or cathode and a method of producing an electrode and/or cathode. The present disclosure in particular solves the most critical drawbacks of existing alkali-ion/chalcogenide batteries as it merges beneficial properties of both crystalline and glass/polymeric/amorphous chalcogenide active materials capable of forming/co-existing as glass/polymeric/amorphous and crystalline phases, wherein the surface driven photonically/electronically induced ring opening polymerization (ROP) forms a thin chemically bonded insoluble co-polymerized "shell" which protects the "crystalline inner core", wherein such layer exhibits mixed ionically and electronically conductive non-detachable protective transition layer, originating from chemically/covalently bonded "core-shell strategy".

### BACKGROUND

Metal-sulfur (M-S) batteries are thought to be promising candidates for next-generation energy storage. However, the practical implementation of such M-S batteries, for example, lithium-sulfur (Li-S) technology is limited by the insulating nature of sulfur (electronic conductivity ~10⁻³⁰ S.cm⁻¹ at room temperature) and its low utilization factor originating from low ionic conductivity ~10⁻¹³ S.cm⁻¹ and severe capacity fading during cycling (charge/discharge) due to the shuttling of intermediate lithium polysulfide (PSs) (Li₂Sₙ, 4 ≤ n≤ 8).

The poor electronic conductivity of sulfur and shuttling of the PSs leads to inadequate active material utilization, resulting in detrimental rate capability and capacity fading. To overcome the said drawbacks, sulfur is often impregnated/encapsulated into a conductive porous matrix, for example, porous carbon, graphene, carbon nanotubes, metal-organic frameworks, and/or a mixture of different conductive host structures, to expedite electron transport, buffer the volume expansion, and mitigate the polysulfide dissolution.

Even after some significant advancement, chalcogenide-based electrodes, e.g. sulfur-containing cathodes, suffer from poor electronic conductivity, inadequate cycling performance, and rate capabilities.

In state-of-the-art slurry-based sulfur-containing cathodes, electrons and ions (e.g., Li⁺) are transported through a percolation network formed by randomly driven processes where the main building blocks are particles-aggregates-clusters (PACs) consisting of redox-active materials also known as sulfur/sulfur species, polymeric or mechanical binders such as single-wall carbon nanotubes (SWCNTs) or other electrically and/or ionically conductive and processing additives. To be operable at an acceptable utilization factor, the w/v content of conductive additives in such an electrode (cathode) must reach a certain wt. % to breach the percolation threshold beyond which the electrode (cathode) gains sufficient electronic and/or ionic conductivity. For example, sulfur-based cathodes produced by inverse vulcanization are known to have low active mass content due to the requirement of a suitable cross-linking agent, or co-monomer, in exact ratios to accomplish the sulfur copolymerization. Typically, wt. ratios are around 80% sulfur and 20% crosslinking agents such as 1,3-diisopropyl benzene (DIB), forming poly(sulfur-random-(1,3-diisopropenylzene)) copolymers also referred to as poly(S-r-DIB).

An objective of the present disclosure is to provide a stabilized chalcogenide-rich electrode, most desirably a sulfur-rich cathode, which provides improved electronic and/or ionic conductivity, is capable to buffer any volume change, and mitigates polysulfide dissolution during cycling. This electrode can be used in electrochemical energy storage devices, such as primary and/or secondary rechargeable batteries containing alkali and/or alkali earth (Li, Na, K, Ca, Mg, etc.) and/or Al metal/ion and/or Zn metal/ion and/or Ca metal/ion, for example, high-energy Li-S batteries, Na-S batteries, Mg-S batteries, Al-S, Zn-S batteries or Ca-S batteries. Further objectives will become apparent based on the following description and the patent claims. Another aspect of the present disclosure is the presence of sulfur Sₓ^{•} radicals after photon and/or electron irradiation which then induces selective reduction of graphene oxide (GO) into reduced graphene oxide (rGO) at the interface between sulfur and GO, wherein there are still residual predominantly negative charged functional groups on the surface capable to react with suitable co-monomers and/or to provide doping for the conjugated polymers such as PEDOT and/or providing shielding/repulsive effect for negatively charged polysulfides, thus restricting the diffusion/migration of polysulfides from the cathode.

The presence of highly thermally conductive rGO (800 W/mK) on the surface and low thermally conductive sulfur (0.12 W/mK) enables the formation of a thermal gradient between the core/shell so that in the subsequent quenching process, the solidification of preferable monoclinic sulfur allotrope propagates from the rGO-S stabilized polymeric shell towards the crystalline core. This difference between the density of the glass/amorphous/polymeric and crystalline allotropes of sulfur allows the introduction of a density gradient, which acts as a buffer for volumetric expansion during cycling. For example, a non-detachable, chemically bonded, ionically and electronically conductive, protective layer for a porous sulfur wafer/cathode comprising of monoclinic (β- and/or γ-phasic) sulfur allotrope (Theion: WO 2021/233965 A1) to realize an electrochemical energy storage device containing alkali and/or alkali earth (Li, Na, K, Ca, Mg, Al, Zn, etc.) metal/ion, for example, Li-S batteries, or Na-S batteries, or Mg-S batteries, Al-S, Zn-S batteries or Ca-S batteries.

### SUMMARY OF THE DISCLOSURE

The present disclosure relates to an electrode and/or cathode stabilized e.g. by a transition layer, comprising at least one of:
(a) a porous chalcogenide-based electrode, for example sulfur, e.g. comprising (or constituting) of predominantly crystalline allotropes within the core;
(b) at least one of a glass, polymeric and amorphous chalcogenide, for example sulfur allotropes present within the transition layer and/or shell covering the surface of the active electrode material, the transition layer comprising e.g. (of) a two-dimensional (2D) material, covalently bonded between said 2D material and the chalcogenide, for example sulfur of the electrode material, and e.g. 12 weight % or less, based on the total weight of the coated electrode, of polymeric sulfur; and
(c) a coating layer on top of the transition layer said coating layer comprising e.g. a 2D material,
(d) e.g. a presence of density gradient between the crystalline core and e.g. glass/polymeric/amorphous shell (in one example, item (d) may also be an optional consequence of the electrode of the present disclosure),
(e) an electrode (which may be the electrode of the present disclosure or a part of the electrode of the present disclosure) in which the volume of crystalline allotrope present within the inner voids represents a buffer volume utilized to compensate the volumetric fluctuation during battery cycling (in one example, item (e) may also be an optional consequence of the electrode of the present disclosure),
(f) a chalcogenide electrode (which may be the electrode of the present disclosure or a part of the electrode of the present disclosure), for example a sulfur-rich electrode, where the electrode active mass consists of binary and or ternary dopant such as selenium, tellurium having composition (SexSy), (TexSy), (TexSySez), wherein the mass content of sulfur in the cathode may be above 50% per weight of the total chalcogenide content.
(g) Moreover the coated electrode and/or cathode may comprise e.g. at least one sulfur allotrope that may be doped with a chalcogenide, a halogen, or a mixture thereof, for example comprised from 0.001 to 50 weight % of the chalcogenide, halogen or mixture thereof, based on the total weight of the sulfur allotrope, such as 0.01 to 49 weight %, 0.1 to 45 weight %, 0.5 to 44 weight % or 0.75 to 43 weight %, such as 1 weight %, 1.5 weight % or 2 weight % of the chalcogenide, halogen or mixture thereof.

The amorphous chalcogenide, for example sulfur shell may be the product of photon and/or electron radiation-induced ring opening polymerization of crystalline chalcogenide allotropes.

The transition layer may be the product of photon and/or electron radiation passing through the transparent graphene oxide layer coated onto the crystalline allotrope of chalcogenide, for example sulfur core, wherein the photon and/or electron radiation induces the ROP of the chalcogenide, for example sulfur and in-situ reduction of graphene oxide to reduced graphene oxide.

The in-situ formed transition layer may be covalently bonded to the surface of the chalcogenide active material, for example sulfur.

The transition layer may be rich in negatively charged surface functional groups (for example: not limited to thiol, thioether, sulfoxide, sulfone, and sulfonic acid) resulting from the photon and/or electron induced ROP of chalcogenide, for example sulfur and de-oxygenation of graphene oxide to reduced graphene oxide, wherein the negatively charged surface acts as the polysulfide blocking interlayer.

The photon/electron radiation may have a wavelength of photon radiation being e.g. between 450 nm and 120 nm in regard to light/UV.

The photon/electron radiation may have a wavelength of photon radiation being e.g. between 10-12 m and 10-16 m in regard to gamma radiation.

The photon/electron radiation may have an electron radiation energy of at least 5 MeV.

The covalent bond between the reduced graphene oxide containing transition layer and the amorphous chalcogenide, for example sulfur shell, may be the product of providing a gaseous and/or vapor and/or liquid co-monomer, optionally penetrating the internal cavities of the chalcogenide electrodes. Under the influence of irradiation, a chalcogenide-rich co-polymer may be formed together with the reduced graphene oxide containing transition layer.

The first coating layer and/or layers may be permeable to cations, such as e.g. Li+, Na+, K+, Ca2+, Zn2+, Mg2+ Al3+, but not limited to and e.g. electronically conductive. The 2D material of the first coating layer may be functionalized with groups capable of reactions with the chalcogenide, for example sulfur, and/or decorated with metal nanoparticles, metal oxide nanoparticles, metal alloy nanoparticles, non-metal alloy nanoparticles, or a mixture of any of the foregoing.

The first coating layer may have a thickness of e.g. from 0.3 to 500 nm, such as from 5 to 500 nm, 8 to 250 nm, or 10 to 200 nm, such 1nm, 10 nm, 100 nm, 150 nm or 200 nm wherein the second coating layer may comprise of micro sheets of a 2D material, nanosheets of a 2D material, and/or charged 2D material and/or a mixture thereof. A second 2D material layer may be provided, e.g. coating the electrode on top of the reduced graphene oxide containing transition layer.

The layers may be obtained by layer by layer assembly, e.g. electrostatic driven layer-by-layer assembly, spin-coating, bar coating, slot-die coating, roll-to-roll printing, screen-printing, flexographic printing, lithographic printing, ink-jet printing or film stretching.

The 2D material of the second coating layer may be selected from the group comprising e.g. carbon, graphene, graphene oxide, graphitic carbon nitride, hexagonal boron nitride, aluminum nitride, molybdenum nitride, titanium nitride, silicene, phosphorene, germanene, a transition metal dichalcogenide, a transition metal oxide, a transition metal carbide, a transition metal nitride, or a composite mixture of any two or more of any of the foregoing. For example the second layer may comprise of graphene and/or graphene oxide and/or a mixture of graphene oxide and reduced graphene oxide.

The second coating layer and/or layers may be permeable to cations, such as Li+, Na+, K+, Ca2+, Zn2+, Mg2+ Al3+, but not limited to and/or electronically conductive. The second coating layer may have a thickness ranging e.g. from 0.3 nm to 15 µm, such as from 50 nm to 15 µm, 0.5 to 14 µm, 2.5 to 13 µm, 5 to 12 µm, or 7.5 to 11 µm, such as 8, 9 or 10 µm.

A part of the second coated transition layer may be in direct contact with an electrolyte between electrodes and or in-direct mediated contact with catholyte present within the electrode.

A part of the second coating layer may be in direct contact with a current collector. The total thickness of the first and second coating layer may be ranging e.g. from 0.3 nm to 15 µm, such as from 0.5 µm to 15 µm, such as from 2.5 to 14 µm, 5 to 13 µm, or 7.5 to 12 µm, such as 8, 9 or 10 µm, for example 10 to 200 nm.

The present disclosure further relates to a method of producing an electrode and/or cathode, comprising e.g. at least one of the steps of
a. providing a crystalline chalcogenide allotrope core, for example sulfur core,
b. forming a first photon/electron radiation transparent, graphene oxide comprising, material coating layer on the surface of the The electrode and/or cathode,
c. exposing the electrode to photon and/or electron radiation, e.g. inducing ring opening polymerization of crystalline sulfur, e.g. creating an amorphous sulfur shell on the crystalline sulfur core, wherein e.g. graphene oxide reacts via photon and/or electron radiation induced ring opening polymerization of crystalline sulfur by in-situ reduction de-oxygenation to reduced graphene oxide, and
d. covalently bonding the reduced graphene oxide containing layer to the amorphous sulfur shell.

The method may further comprise the step of creating the covalent bond between the reduced graphene oxide containing transition layer and the amorphous chalcogenide shell (e.g. sulfur shell). For example, the shell may be performed by providing a gaseous and/or vapor and/or liquid co-monomer, and using photon and/or electron radiation for converting crystalline sulfur at the GO and/or sulfur interface into sulfur-rich co-polymer and cross-linking the sulfur and/or sulfur allotrope of the electrode material with the reduced graphene oxide containing transition layer.

The method may further comprise a step of coating the electrode with a second 2D material layer on top of the reduced graphene oxide containing transition layer.

The first coating layer of step b may be formed by dip coating, vacuum filtering, spray coating, layer by layer, spin-coating, bar coating, slot-die coating, roll-to-roll printing, screen-printing, flexographic printing, lithographic printing, ink-jet printing or film stretching.

The second coating layer may be formed by electrophoretic deposition and/or reduction of the second 2D material.

The present disclosure further relates to a primary or secondary energy storage device (e.g. a battery), or an electrochemical cell, comprising e.g. the electrode as described above and/or produced according to a method as described above.

The primary or secondary energy storage device, or the electrochemical cell may further comprising e.g. at least one electrolyte, such as a liquid electrolyte, polymer electrolyte, gel electrolyte, solid electrolyte, catholyte, composite electrolyte and/or a mixture thereof.

In the present disclosure term "comprising of" may mean "consisting of" or "comprising".

In particular, the present disclosure relates to a structurally stabilized chalcogenide-rich cathode, most desirably sulfur-rich cathode containing glass/amorphous/polymeric/crystalline chalcogenide allotropes, wherein the glassy/amorphous/polymeric allotrope and/or allotropes are present predominantly in shell and crystalline allotrope and/or allotropes within the core, wherein the density gradient is present between the core and shell. Further a method for making such a layer, and devices comprising the coated electrode. More particularly, it relates to an electrode that on its surface carries layer/layers, comprising of chalcogenide-based active materials, where more desirably sulfur and/or binary sulfur-selenium or ternary sulfur-selenium-tellurium and or quaternary sulfur-iodine-tellurium-selenium is employed as an electrode active material. Such a non-detachable alkali-ion and/or alkali earth metal-ion permeable coating/transition layer is induced by irradiation (i.e., gamma rays and/or accelerated electrons or more desirably by photons under 500 nm), capable to induce ROP of chalcogenide-based materials and to produce an in-situ non-detachable mixed ion/electron transition layer by cross-linking and/or by copolymerization at the interface between the active material and the transition coating layer. The coating layer consists of at least two layers, comprising two-dimensional (2D) materials and is uniformly coated over the surface of the electrode, wherein the surface provides support to this permeable layer. This type of electrode can be used in high-energy rechargeable batteries containing alkali and/or alkali earth metal or other electrochemical devices with cations and/or anions as charge carriers, such as, for example, Li-S batteries, Na-S batteries, Mg-S batteries, Al-S batteries, Zn-S batteries or Ca-S batteries.

Commercially there is a bulk amorphous insoluble sulfur used at a megaton scale within the tire vulcanization industry. Such insoluble sulfur is produced, for example via high-temperature treatment along with the use of a capping agent to stabilize the polymeric sulfur. In comparison, the present disclosure demonstrates that an in-situ stabilized insoluble sulfur allotrope can be prepared via photon/electron irradiation and stabilized by a covalently bonded mixed ion and electron permeable thin transition layer, which acts as the shell. The shell protects the main crystalline chalcogenide core, more desirably sulfur core, while allowing its cycling, wherein the stabilization effect is provided by photon/electron induced thin transition layer and the process which arrests the glass/polymeric/amorphous and crystalline chalcogenide allotropes in desired positions.

The disclosure provides a mixed alkali/ion and or alkali earth/ion where desirably Li⁺ permeable, e⁻ conductive non-detachable protective layer supported or carried by a surface of an electrode comprising a chalcogenide-based redox active material. The chalcogenide-based active mass and the building blocks for a subsequent layer and/or layers in form of suitable precursors coated over the electrode are treated with a suitable radiation source in such a way that allotrope transition from crystalline to glass/polymeric/amorphous is induced together with ROP. Furthermore, ROP propagates within the surface of the chalcogenide cathode having a three-dimensional (3D) body, for example, a sulfur body or a monolithic sulfur wafer like-structure is drawn into reaction with a suitable co-monomer and/or co-monomers in liquid and/or gaseous form and suitable crosslinking agent/or capping agent to prevent backward conversion from glass/polymeric/amorphous sulfur back to crystalline allotrope. Furthermore, the non-detachable layer comprises at least one two-dimensional (2D) material, i.e., carbon, graphene/graphene oxide, transition metal dichalcogenides (e.g., MoS₂, WS₂, MoTe₂, MoSe₂, WSe₂, VS₂, VS₄, TiS₂, TiS₄, etc.), transition metal carbides/nitrides, generally referred to as MXene, e.g., Ti₂C, V₂C, Mo₂C, Ti₃AlC₂, Mo₂TiC₂, etc., h-BN (hexagonal boron nitride), graphitic carbon nitride (g-C₃N₄), or a composite mixture of any two or more thereof, and, optionally, said 2D material can be decorated with metal and/or metal oxide nanoparticles. The non-detachable transition layer is uniformly coated over the surface of the electrode, e.g. cathode, which comprises crystalline, amorphous, glass, and/or polymeric chalcogenide, most desirably sulfur, or a mixture of any two or more thereof. In some embodiments, the sulfur or sulfur allotrope(s) can be doped with other chalcogenides and/or halogen dopants. Such a coated electrode (e.g. cathode) or 3D object can be used in high-energy rechargeable batteries containing alkali and/or alkali earth (Li, Na, K, Ca, Mg, Al, Zn, etc.) metal/ion, for example in Li-S batteries, Na-S batteries, Mg-S batteries or Al-S, Zn-S batteries or Ca-S batteries. What is provided according to the disclosure is an electrode (cathode) for use in an electrochemical device, with a crystalline chalcogenide core, more desirably sulfur allotrope core, a glass/polymeric/amorphous chalcogenide shell, more desirably a glass/polymeric/amorphous and a reduced graphene oxide containing transition layer, covalently bound to the glass/polymeric/amorphous chalcogenide shell.

The electrode or cathode, according to the disclosure, utilizes the beneficial properties of allotropic transitions found in chalcogenides. For example, sulfur possesses crystalline α, β, and γ allotropes, as well as amorphous forms. By exploiting the differences in solubility between these allotropes, a transition layer is created using the least soluble allotrope. While the cyclic orthorhombic α-sulfur allotrope is highly soluble in carbon disulfide (CS₂) solvent, the polymeric allotrope is in-soluble. By constructing a transition layer from the most stable allotropic form, while preserving the inner core consisting of the crystalline allotrope, maximum utilization of the active mass of sulfur can be achieved while simultaneously alleviating the PS shuttle issues.

Desirably, the glass/polymeric/amorphous sulfur shell is the product of photon/electron radiation-induced ROP of crystalline chalcogenide, while the transition layer is transparent towards the photon/electron radiation, more desirably the transition layer is made up of graphene oxide, wherein the graphene oxide reacts with the amorphous chalcogenide, which undergoes ROP during the photon/electron radiation and leads to in-situ de-oxygenation of graphene oxide to reduced graphene oxide.

The chalcogenide based active mass and the building block for one or more subsequent layers in the form of suitable precursors are treated with photon/electron radiation in such a way that allotrope transition from crystalline to glass/polymeric/amorphous chalcogenide is induced together with ROP and propagates at the interface between the transition layer and the chalcogenide cathode, which may have a three-dimensional (3D) chalcogenide body, a monolithic chalcogenide wafer like-structure, or similar and is drawn into reaction with a suitable gaseous/vapor/liquid co-monomer, penetrating into the amorphous chalcogenide shell, converting the amorphous chalcogenide shell into a chalcogenide-rich co-polymer, and cross-linking between the chalcogenide/chalcogenide allotrope of the electrode material and the reduced graphene oxide containing transition layer, creating a covalent bond.

The photon/electron radiation used to induce ring open polymerization is desirably blue/ultraviolet light, and/or high energetic photons such as γ-radiation and/or an electron beam. The wavelengths used in the electromagnetic spectra in regard to the blue/ultraviolet should be more desirably in the range of 450 nm down to the deep UV region at 120 nm. The sources for the γ rays irradiation should more desirably come from a ⁶⁰Co source or a ¹³⁷Cs source. The electron beam energy could be between 5 and 10 MeV.

Without being bound to any particular theory, it is believed that the reaction between the graphene oxide-containing coating and the chalcogenide/chalcogenide allotrope in the electrode material converts the chalcogenide on the surface of the electrode material into insoluble, stabilized polymeric chalcogenide thereby providing a crystalline-to-polymeric transition between the core and shell of the chalcogenide-containing electrode/electrode material. In other words, the transition layer provides structural support to the electrode (e.g., cathode). This structural support helps to prevent or avoid collapsing of the internal porosity and thus blocking of internal channels in the sulfur-containing electrode material which can occur due to volumetric expansion of the sulfur during operation of the electrode.

The transition layer mitigates the PS shuttle effect during the battery operation. Advantageously, the transition layer is ionically (e.g., allows the passage of alkali metal ions through the layer) and/or electronically conductive. Otherwise defined as mixed ion and/or electron conductor.

The sulfur in the electrode material described herein can comprise any sulfur allotrope, including orthorhombic, glassy, amorphous, and/or polymeric (e.g., β- and/or γ- and/or ω or other phases) sulfur, and/or a mixture of two or more sulfur allotropes, pristine or doped with one or more chalcogenide dopants, halogen dopants, or a mixture of any two or more of the foregoing, such as being doped with selenium (Se), tellurium (Te), iodine (I) or a mixture of any two or more of them. The electrode material can also comprise a further chalcogenide-based redox active material, such as Se, Te, or a mixture thereof. The structure of the electrode material is not particularly limited and can be a three-dimensional (3D) body or a wafer like-structure.

Desirably, a doped sulfur allotrope contained in the electrode material may comprise from 0.001 to 50 weight % of a chalcogenide different from sulfur (e.g., Se and/or Te), halogen or mixtures thereof, based on the total weight of the sulfur allotrope, such as 0.01 to 49 weight %, 0.1 to 45 weight %, 0.5 to 44 weight % or 0.75 to 43 weight %, such as 1 weight %, 1.5 weight % or 2 weight % of the chalcogenide (e.g., Se and/or Te), halogen or a mixture thereof.

Desirably, the reduced graphene oxide containing transition layer, covalently bounded to the amorphous sulfur shell is a mixed alkali/ion and or alkali earth/ion, and more preferable Li⁺ permeable, e- conductive, non-detachable, protective, two-dimensional (2D) material layer, supported or carried by the outer surface of the sulfur electrode, comprising a chalcogenide-based redox active material.

Besides reduced graphene oxide, the non-detachable, two-dimensional (2D) material layer may also comprise carbon, graphene, graphene oxide, transition metal dichalcogenides (e.g., MoS₂, WS₂, MoTe₂, MoSe₂, WSe₂, VS₂, VS₄, TiS₂, TiS₄, etc.), transition metal carbides/nitrides, generally referred to as Mxene, e.g., Ti₂C, V₂C, Mo₂C, Ti₃AlC₂, Mo₂TiC₂, etc., h-BN, graphitic carbon nitride (g-C₃N₄), or a composite mixture of any two or more thereof.

Furthermore, said 2D material may be decorated with metal and/or metal oxide nanoparticles. The 2D material can be doped and/or functionalized with one or more functional groups. Examples of functional groups include =O, -OH, -COOH, -F, -COO, -NOs, -NO₂, -R, -Cl, -NH.

Desirably, the non-detachable, transition, two-dimensional (2D) material layer is uniformly coated over the surface of the electrode or cathode and may have a thickness of from 2 nm to 15 µm, such as from 5 nm to 10 µm, 8 nm to 5 µm, or 10 nm to 1 µm, such 10 nm, 15 nm or 20 nm.

The coated electrode or cathode described herein may comprise 1 to 99 weight % of chalcogenide, desirably sulfur, based on the total weight of the coated electrode, such as 20 to 98 weight %, 30 to to 97 weight %, 40 to 96 weight %, 50 to 95 weight %, 60 to 94 weight %, 70 to 93 weight %, or 80 to 92 weight % of sulfur, such as 80, 85, 86, 87, 88, 89 or 90 weight % of sulfur.

The overall structure of the electrode material may have the form of a porous monolithic sulfur wafer, for example, a self-standing monolithic poly-crystalline sulfur wafer comprising twinned and/or branched nanocrystals of monoclinic sulfur, such as a porous monolithic sulfur wafer disclosed in WO 2021/233965 A1. The presence of a crystalline-to-polymeric transition between the core and shell of the sulfur-containing electrode/electrode material (cathode) is particularly advantageous. Just as desirably, the structure of the core may have a lower density and a tailored porosity, for example, present in crystalline monoclinic sulfur.

In a further preferred embodiment, the electrode (cathode) according to the present disclosure may have a second 2D material layer, coating the electrode on top of the reduced graphene oxide-containing transition layer.

The 2D material of both the first and second layers of coating can be a micro sheet, nanosheet, nanoflake, nanoplatelet, or a mixture thereof.

The first and second coating layers may also be permeable to cations, such as Li⁺, Na⁺, Ca²⁺, Mg²⁺ Al³⁺, and Zn²⁺, and be electronically conductive. The total thickness of the first and second coating layer may be from 5 nm to 15 µm, wherein the first coating layer desirably has a lower density than the second coating layer.

The first- and second-layer coatings desirably form a protective transition coating on the surface of the chalcogenide-containing electrode/electrode material. The second layer is deposited/coated over the first inner layer coating, and is in intimate contact with the first coating layer, covering the whole surface of the first layer.

It is further advantageous when the 2D material coating layers are transparent to photons across the thickness of the electrode. The first and/or second 2D material coating layers may further be flexible in volume.

The 2D material, may, for example, be selected from the group comprising carbon, graphene, graphene oxide, graphitic carbon nitride, hexagonal boron nitride, aluminum nitride, molybdenum nitride, titanium nitride, silicene, phosphorene, germanene, a transition metal dichalcogenide, a transition metal oxide, a transition metal carbide, a transition metal nitride, or a composite mixture of any two or more of any of the foregoing.

Each of the first and second coating layers may consist of a single layer, the first coating layer may consist of a single layer and the second coating layer may have a laminate structure, the first coating layer may have a laminate structure, and the second coating layer may consist of a single layer or each of the first and second coating layers may have a laminate structure.

The term "laminate structure" as used herein means an assembly comprising two or more layers of a material, such as two or more stacked layers. In general, a laminate may be regarded as a type of plate or thin-shell structure, which is typically formed by building up successive layers of material. Layers of different materials may be used, resulting in a hybrid laminate. Laminates can provide required engineering properties, including in-plane stiffness, bending stiffness, strength, and coefficient of thermal expansion.

The first and second coating layer may comprise, if present, from 0.1 to 30 weight % of charged 2D material, based on the total weight of the coated electrode, such as 1 to 25 weight %, 2 to 20 weight %, 3 to 15 weight % or 4 to 12 weight % of charged 2D material, such as 8.5 weight %, 9 weight % or 10 weight % of charged 2D material.

The transition and the allotrope stabilization layer, i.e. the combination of the first and second coating layer described herein, can improve the stability of the electrode during expansion/contraction i.e. during battery discharge/charge, and ensures maximum utilization of the active mass of the electrode as it forms a stable structure with the chalcogenide/chalcogenide allotrope contained in the electrode material.

A coated electrode/cathode in accordance with the present disclosure allows for a new electrode design, namely a "fish-scale design". Dissimilar from the state-of-the-art approaches, the covalently bonded, non-detachable protective transition first layer, creates a robust and efficient contact between the electrode (e.g., cathode) structure comprising chalcogenide, more desirably sulfur and the electrolyte (e.g., catholyte) enabling superior and stable ion and/or electron transport. As a result, a coated electrode as disclosed herein reduces or overcomes the problems of low electrical conductivity of the chalcogenide, more desirably sulfur and polysulfide shuttle, guarantees sufficient ionic and electronic conduction pathways and high utilization of electrode (e.g. cathode) material during cycling.

In general, the technology as described holds great potential for improvement and mass production of advanced electrodes, such as cathodes, for energy storage devices with improved performances.

What is furthermore provided is a method for producing an electrode (cathode), comprising a crystalline sulfur allotrope core and a photon/electron transparent transition layer. Preferable, the photon/electron radiation leads to the in-situ reduction of graphene oxide leading to the formation of rGO along with the ROP of crystalline sulfur and creating a glass/polymeric/amorphous sulfur-rich shell on the crystalline sulfur core, wherein graphene oxide reacts with activated sulfur to reduced graphene oxide, thus covalently bonding the reduced graphene oxide containing layer to the glass/polymeric/amorphous sulfur shell.

As with the electrode above, the step of creating the covalent bond between the reduced graphene oxide containing transition layer and the glass/polymeric/amorphous sulfur shell is desirably performed by providing a gaseous/vapor/liquid co-monomer, penetrating into the amorphous sulfur shell, converting the amorphous sulfur shell into a sulfur-rich co-polymer, and cross-linking the sulfur/sulfur allotrope of the electrode material with the reduced graphene oxide containing transition layer, forming covalent bonds between the first transition layer to the sulfur of the electrode material, thereby making the coating layer non-detachable.

Furthermore, the method may comprise the step of coating the electrode with a second 2D material layer on top of the reduced graphene oxide containing transition layer.

The application of the coating layers may, for example, be performed by dip coating or electrostatic driven layer-by-layer (LbL) assembly of the material. The covalent bonding of the first coating layer or the transition coating, i.e., first and second coating layer, and to the surface of chalcogenide of the electrode material may be provided by triggering ring-opening polymerization of chalcogenide driven by photons at certain frequencies and or electrons accelerated to certain speeds.

The present disclosure provides a solution to one or more of the critical issues related to existing chalcogenide-based alkali/alkali-earth metal/ion (MX) batteries (where M = Li, Na, Mg, Al, Ca, K, Zn, etc., and X = S, Se, Te, and/or a mixture thereof) in that it merges beneficial properties of both crystalline and amorphous chalcogenide electrode (e.g. cathode) material, such as sulfur, by providing an electrode material coated with a thin, covalently bonded, insoluble, co-polymerized "shell" layer protecting the "crystalline inner core" structure of the electrode material.

An electrode or cathode, according to the present disclosure provides improved electronic and/or ionic conductivity, since reduced graphene oxide (rGO) is a good electrical conductor and is capable of mechanically buffering any volume change, along with the physical/chemical mitigation of polysulfide dissolution during cycling.

This electrode may be used in electrochemical energy storage devices, such as primary and/or secondary rechargeable batteries containing alkali and/or alkali earth (Li, Na, K, Ca, Mg, Al, Zn, etc.) and/or Al metal/ion, for example, high-energy Li-S batteries, Na-S batteries, Mg-S batteries or Al-S batteries, and/or similar electrochemical devices.

Examples of storage devices include, for example, electrochemical energy storage devices or primary and/or secondary rechargeable batteries containing alkali and/or alkali earth (Li, Na, K, Ca, Mg, Al, Zn, etc.) metal/ion, such as, for example, Li-S batteries, Na-S batteries, Mg-S batteries or Al-S batteries.

In a preferred embodiment, the storage device can be a lithium-ion or lithium-sulfur battery, in particular a lithium-sulfur battery. Within the scope of the present disclosure, the coated electrode (e.g. cathode) may be free from any (additional) current collector or can comprise an additional separate current collector.

Electrochemical devices comprising a coated electrode according to the present disclosure provide advantages, such as, for example, stable and longer cycle life and rate capabilities due to the transition layer interface between the electrode and electrolyte. The transition layer not only prevents electrode (cathode) deterioration and disintegration but improves performance. Accordingly, a storage device as described herein may, for example, provide better electronic and/or ionic conductivity, improve active mass utilization, advantageously buffer any volume change, and mitigate polysulfide dissolution during cycling.

The primary or secondary energy storage device, or the electrochemical cell, may further comprise at least one electrolyte, such as a liquid electrolyte, polymer electrolyte, solid electrolyte, or a mixture thereof. Typically, the primary or secondary energy storage device, or the electrochemical cell, requires alkali and/or alkali earth metal (Li, Na, K, Ca, Mg, Zn, Ca, Al, etc.), Al metal/ions, graphite, Si, Ge, LTO, Sn, sulfurized polyacrylonitrile (SPAN) structure, or a mixture of any two or all thereof, to perform the charge/discharge cycles.

It is further generally preferred that the primary or secondary energy storage device, or the electrochemical cell, may comprise an alkali metal, alkaline earth metal, aluminum metal, or a metal alloy as anode and a porous separator disposed between the cathode and the anode.

Further examples of the present disclosure are described in the following:
In one further example, the present disclosure may relate to a coated electrode, comprising:
(a) a porous sulfur-based active electrode material comprising a core containing at least one crystalline and/ or amorphous sulfur allotropies,
(b) a transition layer covering the surface of the active electrode material, the transition layer comprising:
   (i) a two-dimensional (2D) material;
   (ii) covalent bonds between said 2D material and sulfur of the electrode material; and
   (iii) 12 weight % or less, based on the total weight of the coated electrode, of polymeric sulfur;
      and
(c) a coating layer on top of the transition layer, said coating layer comprising a 2D material.

In one further example, the present disclosure may relate to a method of producing a coated electrode, comprising the steps of:
(a) providing a free-standing porous sulfur-based electrode structure comprising a crystalline sulfur allotrope core as substrate;
(b) apply a continuous coating comprising a two-dimensional (2D) material on the surface of the sulfur-based electrode substrate;
(c) form a transition layer, comprising covalent bonds between the 2D material of the coating and sulfur of the sulfur-based electrode substrate, and polymeric sulfur at the interface between the coating and the substrate;
(d) apply a coating layer comprising a second 2D material on the transition layer.

Further elements and advantages of the present disclosure can be taken from the following figures and description of a preferred embodiment. The figures show:

### BRIEF DESCRIPTION OF THE DRAWINGS

Fig. 1 a schematic drawing of an example of the process step of forming a first continuous coating layer comprising a two-dimensional (2D) material on a porous chalcogenide wafer substrate;
Fig. 2 a schematic drawing of an embodiment of the process step of forming covalent bonds between the 2D material of the first coating layer and the sulfur substrate by irradiating the coated chalcogenide wafer;
Fig. 3 a schematic drawing of an embodiment of the process step of forming a second coating layer comprising a second 2D material on the first coating layer;
Fig. 4 a photograph of a grown 3D sulfur wafer substrate electrode material (e.g. cathode), fabricated as described in WO 2021/233965 A1;
Fig. 5A a flowchart of an example of a method for producing a coated electrode;
Fig. 5B a flowchart of another example of a method for producing a coated electrode;
Fig. 6 a schematic drawing (cross-sectional) of an example of a protective layer coated electrode material according to an embodiment of the present disclosure;
Fig. 7A, Fig. 7B, and Fig. 7C schematic examples of embodiments of coated battery electrodes (70) according to the disclosure;
Fig. 8 a schematic depiction of the interaction of lithium ions with an embodiment of a coated electrode according to the disclosure;

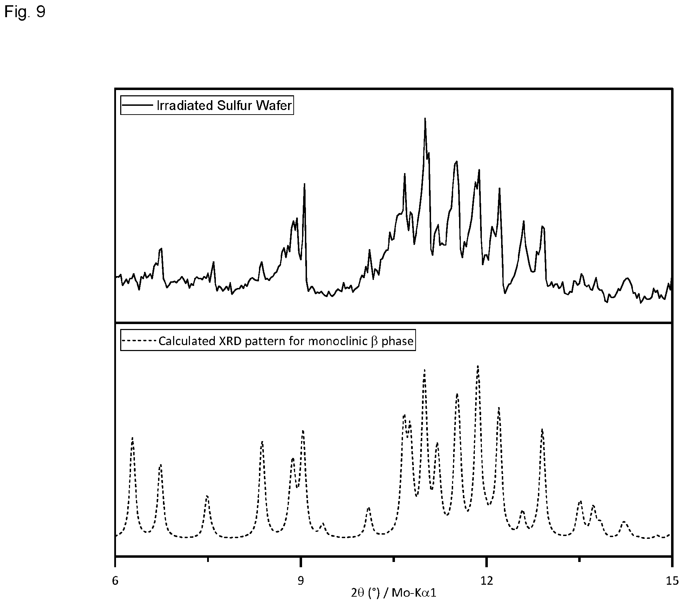

Fig. 9 is a powder X-ray diffraction (p-XRD) pattern of an embodiment of a coated electrode according to the present disclosure. The coated electrode comprises a porous sulfur wafer substrate as disclosed in WO2021/233965 A1 and a first GO coating layer formed by dip coating (i.e. immersing the free-standing porous sulfur wafer in a GO dispersion and subsequently drying) and covalently bound to the sulfur of the electrode material by an irradiation treatment. The coated electrode further comprises a second GO coating layer, which is thicker than the first coating layer, formed by electrophoretic deposition coating, on top of the first covalently bound GO/r-GO coating layer. The diffractogram was collected by performing X-ray powder diffraction measurements on a STOE Stadi MP diffractometer equipped with a Dectris Mythen 1K linear silicon strip detector and Ge(111) double-crystal monochromator (Mo Kα1 radiation) in a transmission geometry.
   It confirms the presence of monoclinic beta (β) phasic sulfur allotrope.

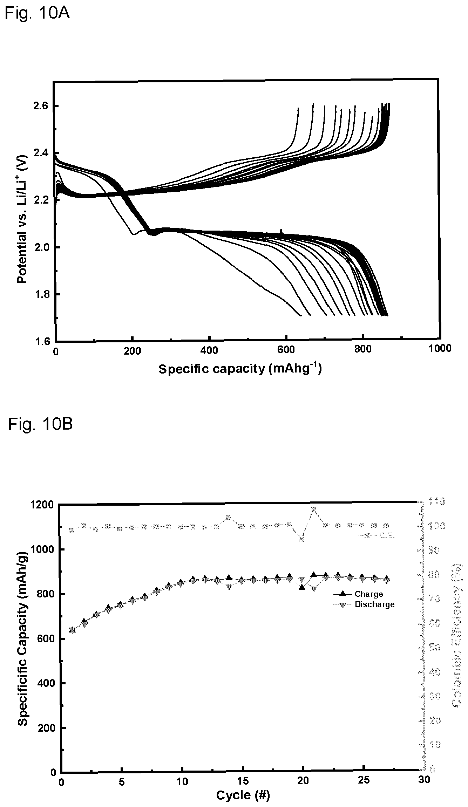

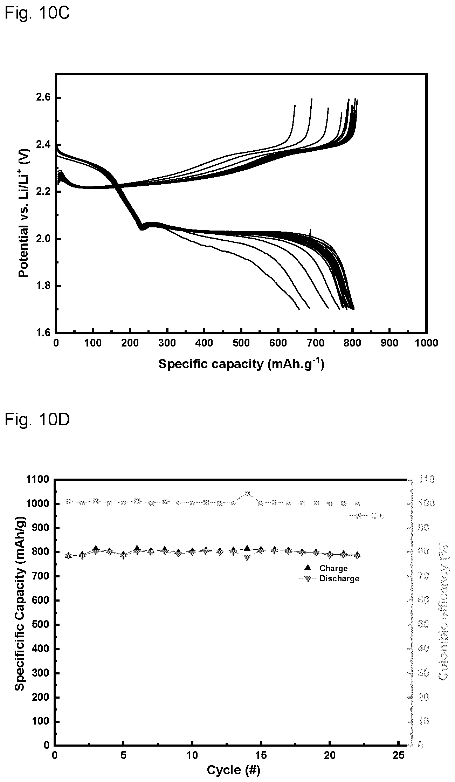

Fig. 10A and 10B show the results of investigations of the galvanostatic charge/discharge behaviour and cycling performance of a pristine sulfur wafer cathode in accordance with WO 2021/233965 A1 carried out at C/10. Fig. 10C and 10D show the results of investigations of the galvanostatic charge/discharge behaviour and cycling performance of an embodiment of a coated electrode according to the disclosure, namely a GO-coated and irradiated sulfur wafer cathode, carried out at C/10. For the cells, 1M LiTFSI and 0.1 M LiNO₃ in DOL/DME (1:1) was used as the electrolyte. By comparing the charge discharge behaviour of the pristine Sulfur wafer and the GO coated and irradiated Sulfur wafer, it becomes clear that the later cathode performs better than the pristine Sulfur wafer interns of the initial utilization factor and capacity retention. This is attributed to the enhanced electronic conductivity of the treated sulfur wafer which results in the reduction of the GO upon irradiation and cross linking with sulfur active material which is beneficial for the capacity retention of the cathode . The cycling measurements were conducted on LAND cycler in galvanostatic mode, using metallic lithium, cellgrad 2500 separator, and ether electrolyte with the provided LAND software (Version 7.4).

### DESCRIPTION OF THE DISCLOSURE

In an aspect of the present disclosure, a coated electrode, comprising:
(a) chalcogenide, more desirably sulfur as electrode material;
(b) a first coating layer comprising a two-dimensional (2D) material and covering the entire surface of the electrode; and
(c) a second coating layer on top of the first coating layer, said second coating layer comprising a 2D material; characterized in that the first coating layer is covalently bound to the chalcogenide-based electrode material, is provided.

It has been found by the inventors that a coated electrode in accordance with the present disclosure provides improved electronic and/or ionic conductivity, is capable to buffer any volume change, and mitigates polysulfide dissolution during cycling. In particular, it was found that an electrode coated with an ionically and electronically conductive, covalently bonded protection layer comprising 2D material as described herein provides a stable cycling performance and a significant improvement in galvanostatic charge/discharge behaviour.

It has also been found by the inventors that a coated electrode in accordance with the present disclosure allows for a new electrode design, namely a "fish-scale design". In one embodiment, the coated electrode may be a cathode having a "fish-scale design". Dissimilar from the state-of-the-art approaches, the covalently bonded, non-detachable protective layer, creates a robust and efficient contact between the electrode (e.g., cathode) structure comprising sulfur and the electrolyte (e.g., catholyte) enabling superior and stable ion and/or electron transport. As a result, a coated electrode as disclosed herein reduces or overcomes the problems of low electrical conductivity, polysulfide shuttle, and active mass utilization of current electrodes as the electrode/current collector design disclosed herein guarantees sufficient ionic and electronic conduction pathways and high utilization of electrode (e.g. cathode) material during cycling. In general, the technology holds great potential for rational improvement and mass production of advanced electrodes, such as cathodes, for energy storage devices with improved performances.

The present disclosure provides a non-detachable transition layer supported or carried by the surface of an electrode (e.g., cathode) comprising sulfur as electrode material. The sulfur in the electrode material described herein can comprise any sulfur allotrope, pristine or doped with one or more chalcogenide dopants, halogen dopants, or a mixture of any two or more of the foregoing, such as being doped with selenium (Se), tellurium (Te), iodine (I) or a mixture of any two or more of them. The electrode material can also comprise a further chalcogenide-based redox active material, such as Se, Te, or a mixture thereof. The structure of the electrode material is not particularly limited and can be a three-dimensional (3D) body or a wafer like-structure.

Furthermore, the transition layer, i.e. the combination of the first and second coating layer described herein, can improve the stability of the electrode during expansion and ensures maximum utilization of the active mass of the electrode as it forms a stable structure with the sulfur/sulfur allotrope contained in the electrode material. In particular, without being bound to any particular theory, it is believed that the reaction between the 2D material of the coating and the sulfur/sulfur allotrope in the electrode material converts the sulfur on the surface of the electrode material into insoluble, stabilized glass/polymeric/amorphous sulfur thereby providing a crystalline-to-polymeric transition between the core and shell of the sulfur-containing electrode/electrode material.

In other words, the transition layer provides structural support to the electrode (e.g., cathode, including a sulfur wafer). This structural support helps to prevent or avoid collapsing of the internal porosity and thus blocking of internal channels in the sulfur-containing electrode material which can occur due to volumetric expansion of the sulfur during operation of the electrode. According to a generally applicable preference within the context of this disclosure, the transition layer mitigates the polysulfide shuttle effect during battery operation. Advantageously, the transition layer is ionically (e.g., allows the passage of alkali metal ions through the layer) and/or electronically conductive. The transition layer may include more than two sub-layers.

In a preferred embodiment, the transition layer comprises a first inner layer coating and a second outer layer coating, wherein the inner layer coating is in direct contact and cross-linked (covalently bonded) with the active mass of the electrode (e.g. cathode) comprising or consisting of sulfur/sulfur allotrope. In one embodiment, the ionically and electronically conductive protective layer has a thickness between 5 nm to several microns, for example, 5 nm to 15 µm, such as, for example, 10 µm.

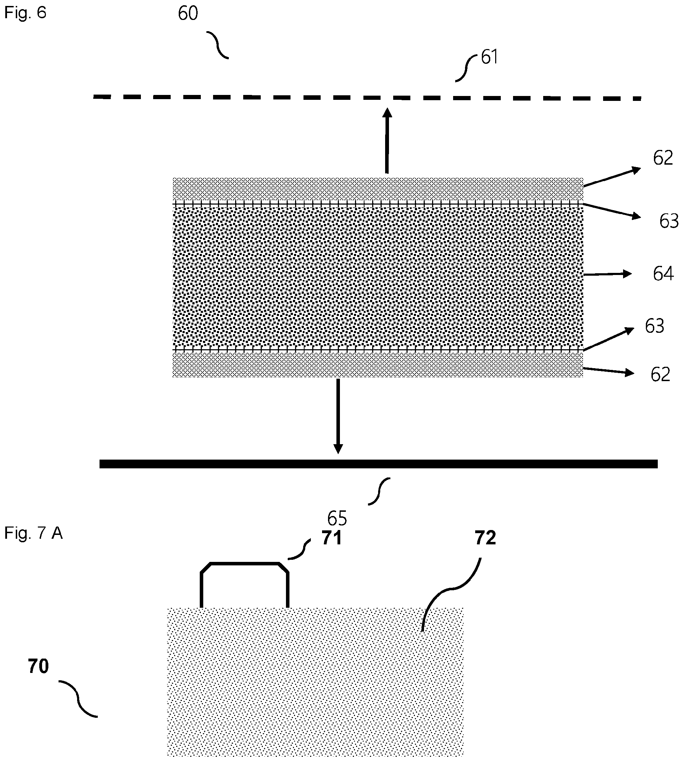

In one embodiment, one face of the second outer layer coating is in direct contact with an electrolyte (e.g. catholyte) while the other face may be in direct contact with a current collector (see, e.g., Fig. 6). The protective layer comprising, for example, nanosheets of 2D materials, may further be positively or negatively charged.

In a preferred embodiment, the protective layer has a density gradient that may comprise GO/r-GO. A conductive transition layer as described herein has beneficial effects on cell performance, such as cycling and rate response. For instance, such a transition layer can reduce interfacial resistance and minimize or eliminate delamination or cracking as well as loss of active mass of the electrode (e.g. cathode) thereby resulting in an improved lifetime.

Typically, the 2D material includes or is made of carbonaceous material, non-carbonaceous material, or a mixture thereof. For example, the 2D material includes or can be made of carbon; a metal such as Aluminum (Al), Bismuth (Bi), Boron (B), Copper (Cu), Gallium (Ga), Germanium (Ge), Indium (In), Iron (Fe), Gold (Au), Molybdenum (Mo), Platinum (Pt), Ruthenium (Ru), Silicon (Si), Silver (Ag), Selenium (Se), Tin (Sn), Titanium (Ti), Tellurium (Te), Tungsten (W), Vanadium (V), and Zinc (Zn), or oxides and alloys thereof; a transition metal dichalcogenide such as MoS₂, WS₂, VS₂, VS₄, TiS₂, and TiS₄; a transition metal carbide (MXene) such as Ti₂C, V₂C, Mo₂C, Ti₃AlC₂, and Mo₂TiC₂; a transition metal nitride/carbonitride such as graphitic carbon nitride (g-C3N4), hexagonal boron nitride (h-BN), silicene, phosphorene, germanene, boron-carbon-nitride (BCN), aluminum nitride, molybdenum nitride, titanium nitride and alloys thereof; or a composite mixture of any of the foregoing.

The 2D material can be doped and/or functionalized with one or more functional groups. Examples of functional groups include -O, -OH, -COOH, -F, -COO, -NOs, - NO₂, -R, -Cl, -NH.

The 2D material can be a micro sheet, nanosheet, nanoflake, nanoplatelet, or a mixture thereof, desirably a micro sheet or nano sheet, such as, for example, a micro sheet or nanosheet of graphene, graphene oxide (GO), reduced graphene oxide (r-GO), an MXene, g-C₃N₄, h-BN, silicene, phosphorene, germanene, BCN, a transition metal dichalcogenide, or a mixture of two or more of the foregoing. Within the scope of one embodiment, the 2D material is a micro sheet or nanosheet. In the context of this disclosure, generally, preferred 2D materials include, for example, GO, MoS₂, Ti₂C, Ti₄O₇ (magneli phase titania oxide), h-BN, and mixtures of graphene and GO, GO and MoS₂, MoS₂, and Ti₂C, and GO and h-BN. According to a generally applicable preference within the context of this disclosure, the 2D material comprises nanosheets of graphene oxide (GO) and/or nanosheets of graphene, GO, reduced graphene oxide (r-GO), or mixtures thereof, such as, for example, GO/r-GO.

According to a generally applicable preference within the context of this disclosure, the electrode (e.g., cathode) material can be sulfur and/or a sulfur allotrope including orthorhombic, glassy, amorphous, and/or polymeric (e.g., β- and/or γ- and/or ω-phasic) sulfur, and/or a mixture of two or more sulfur allotropes. Examples of the sulfur/sulfur allotrope include cyclic sulfur, amorphous chain-like sulfur, tad-pole photo sulfur allotrope, co-polymerized sulfur-doped with other chalcogenide and or halogen dopants, a carbon-sulfur composite comprising a carbon allotrope or defective carbonaceous structures with sulfur and/ or another sulfur allotrope, or other sulfide electrode materials. In general, the electrode is a 3D body comprising crystalline, amorphous, or polymeric (e.g., β- and/or γ- and/or glass/polymeric/amorphous) sulfur, or a mixture thereof.

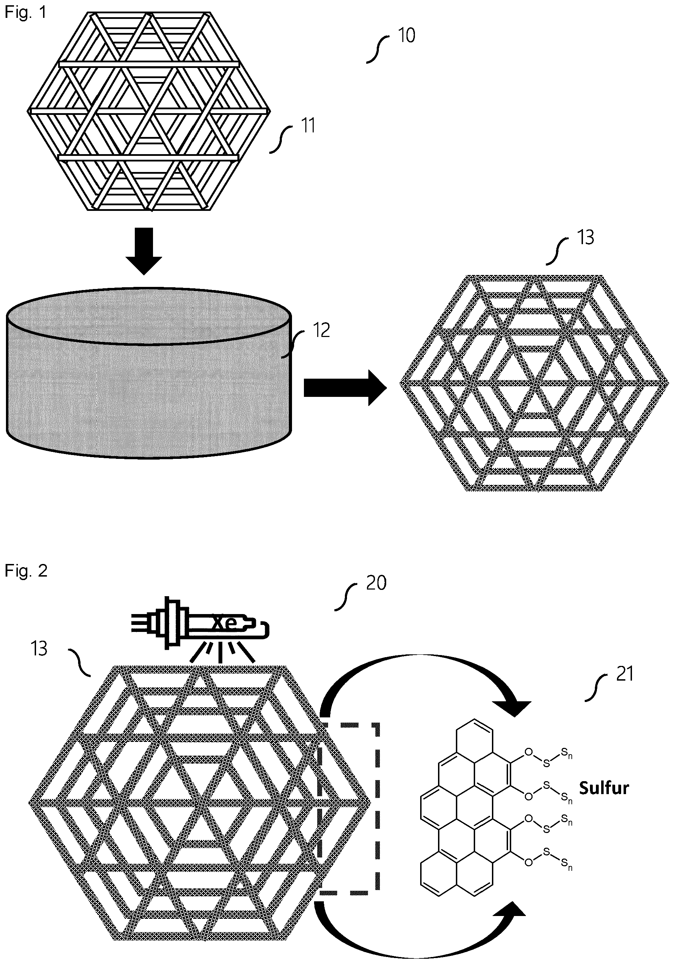

Fig. 1 is a schematic drawing of an example of the process step of forming a first continuous coating layer comprising a two-dimensional (2D) material on a porous sulfur wafer substrate as disclosed in WO 2021/233965 A1 by dip coating. The porous sulfur wafer substrate (11) is dipped into a dispersion of the 2D material (12) whereby the 2D material is electrostatically attached to the surface of the substrate electrode (e.g. cathode) structure. After removal and drying of the substrate, a porous sulfur wafer substrate with a first continuous coating layer (13) is obtained. The coating step (i.e., dipping, emerging and drying) can be repeated a few times until the desired thickness of the first coating layer is achieved. In one embodiment, the 2D material may be graphene oxide (GO), and accordingly, the process step may result in an electrode (cathode) coated with a thin (e.g., a thickness of 5-500 nm) graphene oxide (GO) layer covering the entire surface of the electrode material.

An example of a dip coating process is shown in Fig. 1. This dip coating process, may, for example, include to provide a dispersion (12) or suspension of a definite amount of the 2D material to be coated in a liquid media comprising water, ethanol, methanol, acetone, IPA, DMF, NMP, DMSO, and/or a mixture thereof, with or without the aid of a suitable surfactant, such as, for example, SDS, SDBS, CTAB, Triton X-100, etc., and/or a mixture thereof, followed by sonication, ultrasound treatment and/or centrifugation treatment. As previously noted, the 2D material may include positively and/or negatively charged 2D material.

The formation of the first coating layer can be achieved by electrostatically driven layer-by-layer (LbL) assembly aka dip coating/drying or spray coating/drying, such as, for example, by emerging the electrode material comprising sulfur (11) into a suitable dispersion (12) for a few minutes followed by drying with, for example, IR, air, etc., as presented in Fig. 1. The process of LbL coating, i.e., dipping, emerging and drying, can be repeated as necessary until the desired thickness of the first coating layer, such as described above, is achieved. In the context of this disclosure, 2D material nanosheets are generally preferred for forming the first layer coating. According to a generally applicable preference within the context of this disclosure, the first coating layer may include at least graphene oxide (GO) as 2D material, which may be applied to the sulfur substrate by electrostatically attaching GO nanosheets to the surface of the electrode material using a LbL coating process.

According to a generally preferred embodiment, the first coating layer may be formed in a thickness ranging from 2 to 450 nm, such as from 5 to 350 nm, 8 to 250 nm, or 10 to 200 nm, such as 10 nm, 50 nm, 100 nm, 150 nm or 200 nm. In the context of this disclosure, it is generally preferred when the first coating layer is thinner than the second coating layer.

The method for preparing a coated electrode further comprises the step of forming covalent bonds between a 2D material of the first coating layer and the sulfur substrate of the electrode material. This step (503) of forming covalent bonds is carried out using surface-driven ROP of chalcogenide . The ROP can, for example, be induced by irradiation, such as by flashlight annealing (FLA), UV, VUV, electron-beam, or gamma irradiation, or a combination of two or more of the foregoing. Typically, an irradiation dose ranges from 1 kGy to 300 kGy, such as 10-100 kGy or, for example, 80 kGy, to induce cross-linking between the chalcogenide / chalcogenide allotrope of the electrode material and a 2D coating material, such as, for example, GO nanosheets. In reports, where surface-driven photonic-induced ROP of sulfur has been described, a suitable gaseous and/or vapor co-monomer capable of penetrating only into the shallow depth of a 3D sulfur body has been utilized, converting the shell of said 3D sulfur body into a sulfur-rich co-polymer while the inner core retains its crystalline structure. This chalcogenide-rich co-polymer at the interface is known as "fish scale" structure, and it has been reported that the photon and/or electron radiation induced process uses an average of 82 to 95 % wt. of sulfur and converts at least 3 to 12% sulfur into a co-polymer by reacting with 2 to 6 % wt. gaseous, vapor, and/or liquid co-monomer(s). Due to the cross-linking (i.e. formation of a covalent bond or a short sequence of bonds) between the chalcogenide / chalcogenide allotrope of the electrode material and a 2D coating material comprised in the first coating layer, the first coating layer becomes an integral, non-detachable part of the electrode.

At least the first coating layer formed on the sulfur substrate is transparent or translucent for high energy radiation, ultraviolet light, and/or an electron beam, such as a high energy electron beam, so that activation/ring-opening polymerization (ROP) of chalcogenide can be triggered with a source of photons/electrons at a specific frequency/energy where most of the spectrum is not absorbed by this layer and is reaching the chalcogenide / chalcogenide allotrope comprised in the electrode material.

The first coating layer comprises 2D material and/or composites thereof that are capable of direct or indirect mediated reactions with sulfur. In general, without being bound to any particular theory, it is believed that ROP is a process in which the terminus of cyclic sulfur monomers is opened to form linear sulfur Sₓ^{•} radicals and that the reaction propagates from the inner sulfur core towards the first coating layer applied thereon, where said sulfur radical species simultaneously react with a suitable 2D material comprised in said first coating layer deposited on the surface of the electrode material comprising sulfur/sulfur allotrope.

Fig. 2 is a schematic drawing of an embodiment of the process step of forming covalent bonds between the 2D material of the first coating layer and the sulfur substrate by irradiating the coated sulfur wafer (13) according to an embodiment of the present disclosure. The interfacial regions in the drawing are idealized. The irradiation induces cross-linking between the sulfur substrate electrode material and the 2D coating material(s), for example, the formation of oxygen-sulfur bonds (21) by irradiation-induced ring-opening polymerization (ROP) between the sulfur on the surface of the electrode substrate material and a coating comprising graphene oxide (GO) nanosheets. In an embodiment where the electrode material is coated with a thin layer of GO, the ROP reaction starts with photonically inducing ring opening of sulfur within the core, which propagates towards the coating layer (protective/transition shell) where it reacts with GO and reduces GO producing partially reduced graphene oxide (r-GO).

In the exemplary embodiment shown in Fig. 2, an FLA device is used for ROP. Typically, the active wavelength can be in the blue to UV range (100-400 nm) as the energy of the photons in this range is sufficient to trigger the ROP reaction. To induce non-thermal ROP, photons, i.e. gamma and/or UV range and/or electrons at suitable energies and frequencies are desired. Alternatively, thermally induced ROP may be used, for example, employing a laser source, such as an infra-red (IR) laser, to induce ROP by spot-heating whilst raising the temperature above 159°C, more desirably to around 185°C. Typically, the irradiation process is carried out under a protective environment. As a result of irradiation, sulfur becomes insoluble in most solvents, by converting alpha, beta, and gamma sulfur allotropes into polymeric chain-like sulfur. The coating with a 2D material, such as GO, and subsequent irradiation therefore can allow the conversion of soluble alpha, beta, and gamma sulfur into insoluble stabilized polymeric sulfur.

In one generally preferred embodiment, the first coating layer may comprise GO, and thus the ROP process may include the following: sulfur radicals with unpaired electrons at both ends of the chain formed by photonically inducing sulfur polymerization/scission within the core and then propagate towards the first coating layer comprising GO whereat these sulfur radicals react with GO and partially reduce it to r-GO aka de-oxygenating GO while keeping specific negatively charged functional groups attached. In other words, the sulfur radicals act as an in-situ reducing agent for GO. An example of a typical result of a reduction reaction of GO to r-GO with sulfur radicals is shown below:

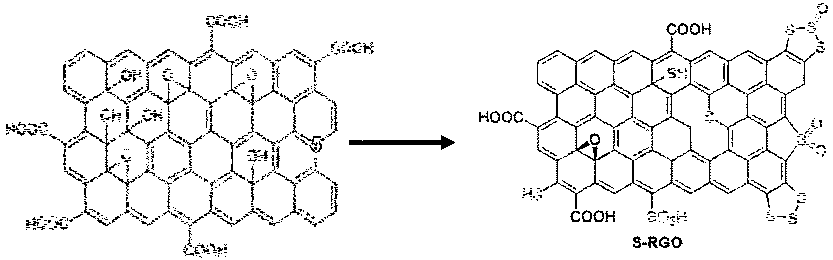

As shown above, residual carboxylic functional groups may be left on GO due to the weak reducing capabilities. In particular, the ROP process results in materials with the following features:
- partially restored graphitic network - basal planes;
- restored electrical conductivity of r-GO (>100 S/cm)
- presence of S functional groups, such as, for example, sulfinyl (>SO), sulfone; 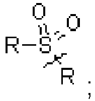 sulfoxide 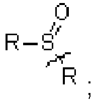 thiol, thioether, thiosulfonate 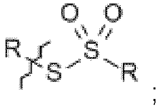 and sulfonic acid 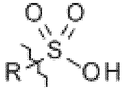 functional group, distributed over the edges or surfaces of the covalently bound 2D material of the first coating layer, such as, for example, GO/r-Go.

The negatively charged functional groups attached to the 2D material, such as GO/r-GO, may later serve as a suitable dopant in subsequent processes. These negatively charged functional groups on the surface can participate in reactions with suitable co-monomers, and can also provide doping for conjugated polymers such as poly-3,4-ethylendioxythiophen (PEDOT). The presence of highly thermally conductive r-GO (thermal conductivity ~800 W/mK) on the surface, along with the low thermal conductivity of sulfur (~0.12 W/mK), can allow for the formation of a thermal gradient between the electrode material core and the coating layer shell structure. As a result, the preferred growth of monoclinic sulfur allotrope can propagate from the outside (shell) to the inside (core) direction during an annealing process, thereby enabling the formation of a structure with density gradients between the core and shell due to crystallization. Moreover, the electrode material comprising sulfur can provide support to a UV-transparent and/or semi-transparent first and/or second coating layer comprising 2D material such as graphene oxide (GO), while the covalently bound layer can be capable of providing structural support to the electrode material, such as, for example, a sulfur wafer. In cases where the intensity of photonic irradiation exceeds the melting point of sulfur, and there is a risk of structural collapse and closing of internal porosity, the first coating layer comprising a 2D material such as GO can provide structural reinforcement.

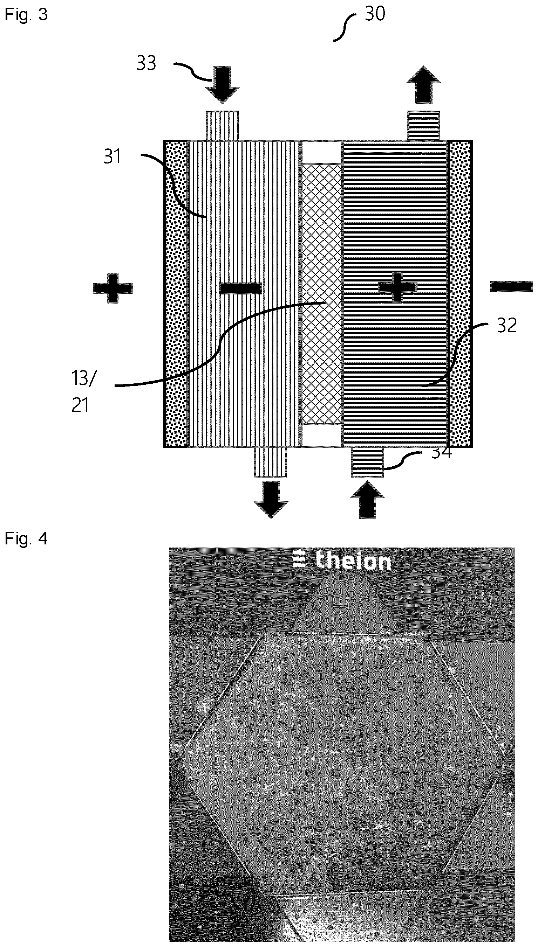

Fig. 3 is a schematic drawing of an embodiment of the process step of forming a second coating layer comprising a second 2D material on the first coating layer according to the present disclosure.

Step (504 or 505 (i)) of forming a second coating layer is not particularly limited and includes the methods for applying a coating on a surface generally known to the person skilled in the art. For example, the second coating layer may be coated on the first coating layer carried by the electrode material containing sulfur/sulfur allotrope by an electrophoretic deposition (EPD) process. EPD is a technique where charged particles in a stable colloidal suspension are transported through the liquid due to the presence of an electric field and deposited on the oppositely charged conductive substrate. The EPD process enables the coating of films with a wide range of thicknesses varying from a few nanometres to several-micron and from porous to highly compact structures with easy control. The films deposited/coated using the EPD process can include different compositions or concentration gradients and can be formed in a relatively short time. Typically, the EDP process is carried out in a monopolar and/or bipolar cell. It is generally preferred that the second coating layer is thicker than the first coating layer. Within the scope of the present disclosure, it is also preferred when the second coating layer is also transparent or translucent, for example, for ultraviolet light and/or an electron beam, such as a high-energy electron beam.

An example of an EDP process (30) using a bipolar cell is shown in Fig. 3. The bipolar cell in this example comprises a catholyte flow through the chamber (33) containing a positively charged dispersion of the second 2D material (31), an anolyte flow through the chamber (34) containing a negatively charged dispersion of the second 2D material (32), a porous sulfur wafer substrate with a first coating layer placed between the catholyte flow through the chamber (33) and the anolyte flow through the chamber (34). In one embodiment, the 2D material for the second coating layer may comprise GO, and accordingly, the EDP treatment may provide a second thicker (e.g., a thickness of 50 nm - 15 µm) GO coating layer on top of the first thin coating layer which is covalently bond to the sulfur on the surface of the electrode material. For example, the chambers (33, 34) of the bipolar cell can be filled with anolyte (electrolytic solution containing anionic species) and catholyte (electrolytic solution containing cationic species) solutions comprising positively/negatively charged 2D material such as graphene/graphene oxide nanosheets. The flow of the respective solutions through the chambers can be controlled and maintained. The electrode material comprising sulfur/sulfur allotrope and a first layer coating (13/21), such as, for example, a sulfur wafer with a first coating layer, can be placed between the two chambers of the bipolar cell so that the anolyte and catholyte solutions have access to the said electrode material. The deposition of positively/negatively charged 2D materials such as, for example, graphene/graphene oxide nanosheets can then be carried out by applying a suitable potential ranging between 0.1- 600V, such as, for example, 10V, 20V, or more, between the chambers of the bipolar cell while maintaining/controlling the concentration and the flow of the anolyte and the catholyte solutions in the respective chambers (Fig. 3). As a result, a thick layer of positively/negatively charged nanosheets of 2D materials is coated over the electrode material and an electrode with a protective layer as described herein and, for example, schematically shown in Fig. 6, can be obtained.

In the embodiment of the electrode accordingly shown here in Fig. 6, the ionically and electronically conductive protective layer has a thickness between 5 nm to several microns, for example, 5 nm to 15 µm, such as, for example, 10 µm. One face of the second outer layer coating is in direct contact with an electrolyte (e.g. catholyte) while the other face may be in direct contact with a current collector (see, e.g. Fig. 6). The protective layer comprising, for example, nanosheets of 2D materials, may further be positively or negatively charged.

A conductive protective layer as described herein has beneficial effects on cell performance, such as cycling and rate response. Such a protective layer can reduce interfacial resistance and minimize or eliminate delamination or cracking as well as loss of active mass of the electrode (e.g. cathode) thereby resulting in an improved lifetime.

Fig. 4 is a photograph of a grown 3D sulfur wafer substrate electrode material (e.g. cathode), fabricated as described in WO 2021/233965 A1.

Generally, a porous sulfur substrate that has utility as electrode material, for example, in lithium-sulfur batteries, can be fabricated using four different methods. These methods depend on the electrode material, for example, a cathode material, used. The first method involves using sulfur in the charged state, while the second method involves using Li₂S in the discharged state. The third method uses a sulfur-rich catholyte, and the fourth method uses covalently bonded sulfur. In this disclosure, a combination of the first, fourth, and partially second methods is used, which offers several benefits. A Li₂S-based electrode, such as a cathode, in the discharged state, exhibits the lowest density and thus occupies the maximum volume in the electrode (expanded state). Additionally, internal porosity or voids in the electrode (cathode) are minimized. This property of the electrode (cathode) dictates the overall performance of a battery, such as a lithium-sulfur battery. Any suitable porous sulfur substrate can be provided as electrode material, including electrode material comprising or consisting of sulfur and/or a sulfur allotrope including orthorhombic, glassy, amorphous, and/or polymeric (e.g., β- and/or γ- and/or polymeric) sulfur, and/or a mixture of two or more sulfur allotropes. Examples of the sulfur/sulfur allotrope include cyclic sulfur, amorphous chain-like sulfur, tad-pole photo sulfur allotrope, co-polymerized sulfur-doped with other chalcogenide and or halogen dopants, a carbon-sulfur composite comprising a carbon allotrope or defective carbonaceous structures with sulfur and/ or another sulfur allotrope, or other sulfide electrode materials. In general, the electrode is a 3D body comprising crystalline, amorphous, or polymeric (e.g., β- and/or γ- and/or ω- phasic) sulfur, or a mixture thereof, and such structures are generally known and available to the person skilled in the art.

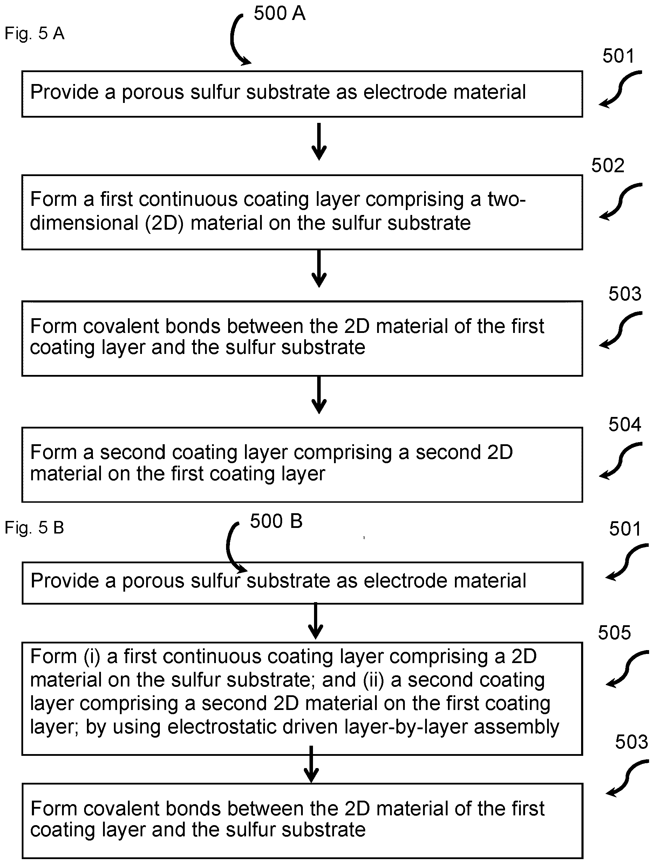

Fig. 5A shows a flowchart of an example of a method (500 A) for producing a coated electrode in accordance with the principles described herein. The method (500A) for producing a coated electrode, comprises the steps of: (a) providing a porous sulfur substrate as electrode material (501); (b) forming a first continuous coating layer comprising a two-dimensional (2D) material on the sulfur substrate (502); (c) forming covalent bonds between the 2D material of the first coating layer and the sulfur substrate (503); (d) forming a second coating layer comprising a second 2D material on the first coating layer (504).

Fig. 5B shows a flowchart of an example of another variant of the method (500 B) for producing a coated electrode in accordance with the principles described herein. The method (500B) for producing a coated electrode, comprises the steps of: (a) providing a porous sulfur substrate as electrode material (501); (b) forming (i) a first continuous coating layer comprising a two-dimensional (2D) material on the sulfur substrate; and (ii) a second coating layer comprising a second 2D material on the first coating layer; by using electrostatically driven layer-by-layer assembly (505); (c) forming covalent bonds between the 2D material of the first coating layer and the sulfur substrate (503). In other words, the step of forming a second coating layer on the first coating layer can be carried out before the covalent bond formation step (503).

The method for producing a coated electrode comprises the step of forming a first continuous coating layer comprising a two-dimensional (2D) material on the sulfur substrate of the electrode material. This step (502 or 505 (i)) of forming a first continuous coating layer is not particularly limited and includes the methods known to the person skilled in the art for applying a coating over the entire surface of a substrate material, such as dip coating, vacuum filtering, spray coating, spin-coating, bar coating, slot-die coating, roll-to-roll printing, screen-printing, flexographic printing, lithographic printing, ink-jet printing or film stretching.

Fig. 6 is a schematic drawing (cross-sectional) of an example of a protective layer coated electrode material according to an embodiment of the present disclosure (60), e.g., a coated sulfur wafer cathode. The coated electrode comprises a porous sulfur substrate (64), a first coating layer comprising a two-dimensional (2D) material (63) that is covalently bonded to the sulfur substrate and covers the entire surface of the electrode material, and a second coating layer comprising a two-dimensional (2D) material (62) on top of the first coating layer (63). One surface of the coated electrode faces toward the electrolyte (61), e.g. towards a catholyte, and one surface of the coated electrode faces towards a current collector (65).

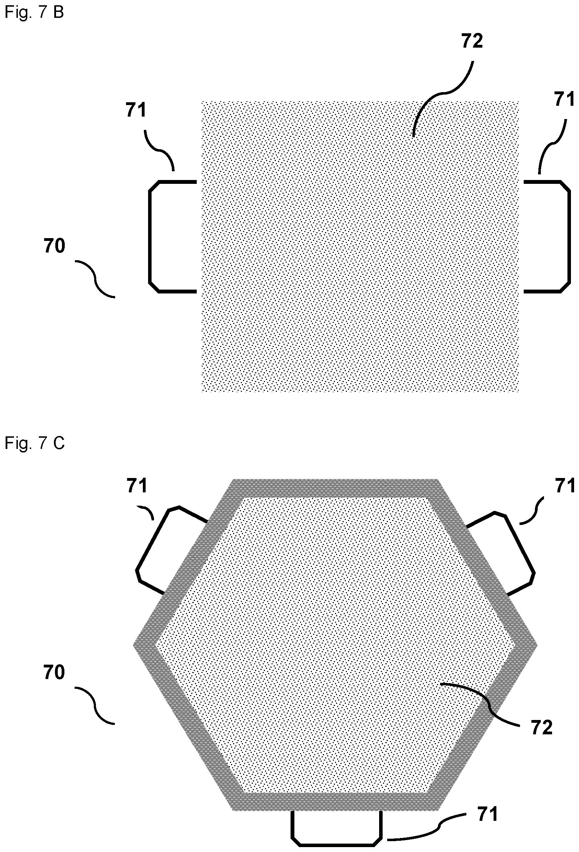

Fig. 7A, Fig. 7B, and Fig. 7C are schematically showing examples of embodiments of coated battery electrodes (70) according to the disclosure comprising a protective layer of coated electrode material according to an embodiment of the present disclosure (72) and one or more current collector tabs (71) attached thereto. In some embodiments, the protective layer may serve as a current collector. Such electrodes can, for example, be used as cathodes in an electrochemical cell or battery.

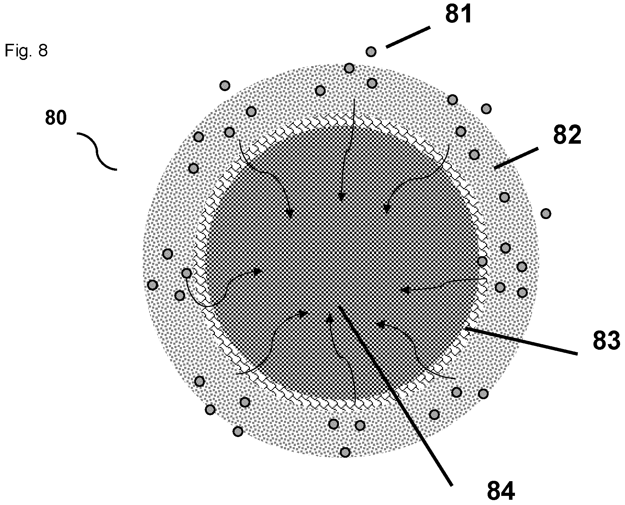

Fig. 8 is schematically showing the interaction of Lithium ions (81) with an embodiment of a coated electrode (80) according to the disclosure. This embodiment of the coated electrode comprises a porous sulfur substrate (84), a first coating layer comprising a two-dimensional (2D) material (83) that is covalently bonded to the sulfur substrate and covers the entire surface of the electrode material, and a second coating layer comprising a two-dimensional (2D) material (82) on top of the first coating layer (83).

Fig. 9 is a powder X-ray diffraction (p-XRD) pattern of an embodiment of a coated electrode according to the present disclosure. The coated electrode comprises a porous sulfur wafer substrate as disclosed in WO 2021/233965 A1 and a first GO coating layer formed by dip coating (i.e. immersing the free-standing porous sulfur wafer in a GO dispersion and subsequently drying) and covalently bound to the sulfur of the electrode material by an irradiation treatment. The coated electrode further comprises a second GO coating layer, which is thicker than the first coating layer, formed by electrophoretic deposition coating, on top of the first covalently bound GO/r-GO coating layer. The diffractogram was collected by performing X-ray powder diffraction measurements on an STOE Stadi MP diffractometer equipped with a Dectris Mythen 1K linear silicon strip detector and Ge(111) double-crystal monochromator (Mo Kα1 radiation) in transmission geometry, confirming the presence of monoclinic beta (β) phasic sulfur allotrope.

Fig. 10A and 10B show the results of investigations of the galvanostatic charge/discharge behaviour and cycling performance of a pristine sulfur wafer cathode in accordance with WO 2021/233965 A1 carried out at C/10. Fig. 10C and 10D show the results of investigations of the galvanostatic charge/discharge behaviour and cycling performance of an embodiment of a coated electrode according to the disclosure, namely a GO-coated and irradiated sulfur wafer cathode, carried out at C/10. The results demonstrate that the cross-linking between sulfur electrode material substrate and the graphene oxide coating leads to a stable cycling performance and a significant improvement in galvanostatic charge/discharge behaviour. The cycling measurements were conducted on a LAND cycler in galvanostatic mode, using metallic lithium, celgrad 2500 separator, and ether electrolyte with the provided LAND software (Version 7.4).

Further examples of the present disclosure are summarized in a numbered order in the following:
Example 1. A coated electrode, comprising:
   (a) sulfur as electrode material;
   (b) a first coating layer comprising a two-dimensional (2D) material and covering the entire surface of the electrode; and
   (c) a second coating layer on top of the first coating layer, said second coating layer comprising a 2D material;
   characterized in that the first coating layer is covalently bound to the sulfur of the electrode material.
2. The coated electrode of example 1, wherein said coated electrode comprises at least one substantially planar surface.
3. The coated electrode of example 1 or 2, wherein the electrode is a cathode.
4. The coated electrode of any one of the preceding examples, wherein the electrode material comprises a crystalline sulfur core.
5. The coated electrode of any one of the preceding examples, wherein the electrode material is a porous monolithic sulfur wafer.
6. The coated electrode of any one of the preceding examples, wherein the sulfur comprises orthorhombic sulfur, glassy sulfur, amorphous sulfur, polymeric sulfur, a combination of two or more sulfur allotropes, or a combination of any of the foregoing.
7. The coated electrode of any one of the preceding examples, wherein the sulfur is present in crystalline and polymeric form.
8. The coated electrode of any one of the preceding examples, comprising at least one sulfur allotrope that is doped with a chalcogenide, a halogen, or a mixture thereof.
9. The coated electrode of example 7, wherein the doped sulfur allotrope comprises of from 0.001 to 10 weight % of the chalcogenide, halogen or mixture thereof, based on the total weight of the sulfur allotrope, such as 0.01 to 9 weight %, 0.1 to 5 weight %, 0.5 to 4 weight % or 0.75 to 3 weight %, such as 1 weight %, 1.5 weight % or 2 weight % of the chalcogenide, halogen or mixture thereof.
10. The coated electrode of any one of the preceding examples, comprising 1 to 99 weight % of sulfur, based on the total weight of the coated electrode, such as 20 to 98 weight %, 30 to to 97 weight %, 40 to to 96 weight %, 50 to 95 weight %, 60 to 94 weight %, 70 to 93 weight %, or 80 to 92 weight % of sulfur, such as 80, 85, 86, 87, 88, 89 or 90 weight % of sulfur.
11. The coated electrode of any one of the preceding examples, wherein the electrode material comprises a self-standing, monolithic, poly-crystalline sulfur wafer comprising or consisting of twinned and/or branched structures of sulfur crystals, such as 1D and/or 2D nanocrystals of monoclinic sulfur.
12. The coated electrode of any one of the preceding examples, wherein the first coating layer comprises microsheets of a 2D material, nanosheets of a 2D material, or a mixture thereof.
13. The coated electrode of any one of the preceding examples, wherein the first coating layer comprises charged 2D material.
14. The coated electrode of any one of the preceding examples, wherein the first coating layer is transparent for ultraviolet light.
15. The coated electrode of any one of the preceding examples, wherein the first coating layer is transparent for an electron beam, such as a high energy electron beam.
16. The coated electrode of any one of the preceding examples, wherein the first coating layer is permeable to cations, such as Li+, Na+, Ca2+, Mg2+ Al3+, and electronically conductive.
17. The coated electrode of any one of the preceding examples, wherein the first coating layer is flexible in volume.
18. The coated electrode of any one of the preceding examples, wherein the first coating layer is a single layer or has a laminate structure.
19. The coated electrode of any one of the preceding examples, wherein the first coating layer is obtainable by electrostatic driven layer-by-layer assembly.
20. The coated electrode of any one of the preceding examples, wherein the covalent bond(s) between the first coating layer and the sulfur of the electrode material is/are formed by a ring-opening polymerization of the sulfur.
21. The coated electrode of any one of the preceding examples, wherein the 2D material of the first coating layer is selected from the group comprising carbon, graphene, graphene oxide, graphitic carbon nitride, boron nitride, hexagonal boron nitride, aluminum nitride, molybdenum nitride, titanium nitride, silicene, phosphorene, germanene, a transition metal dichalcogenide, a transition metal oxide, a transition metal carbide, a transition metal nitride, or a composite mixture of any two or more of any of the foregoing.
22. The coated electrode of any one of the preceding examples, wherein the 2D material of the first coating layer is capable of direct or undirect reaction with sulfur.
23. The coated electrode of any one of the preceding examples, wherein the 2D material of the first coating layer comprises reduced graphene oxide, such as in-situ reduced graphene oxide obtainable by photonic induced ring-opening polymerization of sulfur.
24. The coated electrode of any one of the preceding examples, wherein the 2D material of the first coating layer comprises a mixture of graphene oxide and reduced graphene oxide.
25. The coated electrode of any one of the preceding examples, wherein the 2D material of the first coating layer is free of decoration, functionalized with groups capable of reactions with sulfur, or decorated with metal nanoparticles, metal oxide nanoparticles, metal alloy nanoparticles, non-metal alloy nanoparticles, or a mixture of any of the foregoing.
26. The coated electrode of any one of the preceding examples, wherein the first coating layer has a thickness of from 2 to 45 nm, such as from 5 to 35 nm, 8 to 25 nm, or 10 to 20 nm, such 10 nm, 15 nm or 20 nm.
27. The coated electrode of any one of the preceding examples, wherein the first coating layer has a lower density than the second coating layer.
28. The coated electrode of any one of the preceding examples, wherein the second coating layer comprises microsheets of a 2D material, nanosheets of a 2D material, or a mixture thereof.
29. The coated electrode of any one of the preceding examples, wherein the second coating layer comprises charged 2D material.
30. The coated electrode of any one of the preceding examples, wherein the second coating layer is permeable to cations, such as Li+, Na+, Ca2+, Mg2+ Al3+, and electronically conductive.
31. The coated electrode of any one of the preceding examples, wherein the second coating layer is flexible in volume.
32. The coated electrode of any one of the preceding examples, wherein the second coating layer is a single layer or has a laminate structure.
33. The coated electrode of any one of the preceding examples, wherein the 2D material of the second coating layer is selected from the group comprising carbon, graphene, graphene oxide, graphitic carbon nitride, boron nitride, hexagonal boron nitride, aluminum nitride, molybdenum nitride, titanium nitride, silicene, phosphorene, germanene, a transition metal dichalcogenide, a transition metal oxide, a transition metal carbide, a transition metal nitride, or a composite mixture of any two or more of any of the foregoing.
34. The coated electrode of any one of the preceding examples, wherein the 2D material of the second coating layer comprises graphene.
35. The coated electrode of any one of the preceding examples, wherein the 2D material of the second coating layer comprises graphene oxide.
36. The coated electrode of any one of the preceding examples, wherein the 2D material of the second coating layer comprises a mixture of graphene oxide and reduced graphene oxide.
37. The coated electrode of any one of the preceding examples, wherein the 2D material of the second coating layer is free of decoration, or decorated with metal nanoparticles, metal oxide nanoparticles, metal alloy nanoparticles, non-metal alloy nanoparticles, or a mixture of any of the foregoing.
38. The coated electrode of any one of the preceding examples, wherein the second coating layer has a thickness of from 10 nm to 15 µm, such as from 50 nm to 15 µm, 0.5 to 14 µm, 2.5 to 13 µm, 5 to 12 µm, or 7.5 to 11 µm, such as 8, 9 or 10 µm.
39. The coated electrode of any one of the preceding examples, wherein a part of the second coating layer is in direct contact with an electrolyte, such as an anolyte or catholyte.
40. The coated electrode of any one of the preceding examples, wherein a part of the second coating layer is in direct contact with a catholyte.
41. The coated electrode of any one of the preceding examples, wherein a part of the second coating layer is in direct contact with a current collector.
42. The coated electrode of any one of the preceding examples, wherein each of the first and second coating layer consists of a single layer.
43. The coated electrode of any one of the preceding examples, wherein the first coating layer consists of a single layer and the second coating layer has a laminate structure.
44. The coated electrode of any one of the preceding examples, wherein the first coating layer has a laminate structure and the second coating layer consists of a single layer.
45. The coated electrode of any one of the preceding examples, wherein each of the first and second coating layer has a laminate structure.
46. The coated electrode of any one of the preceding examples, wherein the total thickness of the first and second coating layer is of from 12 nm to 15 µm, such as from 0.5 µm to 15 µm, such as from 2.5 to 14 µm, 5 to 13 µm, or 7.5 to 12 µm, such as 8, 9 or 10 µm.
47. The coated electrode of any one of the preceding examples, wherein the first and second coating layer comprise, if present, of from 0.1 to 30 weight % of charged 2D material, based on the total weight of the coated electrode, such as 1 to 25 weight %, 2 to 20 weight %, 3 to 15 weight % or 4 to 12 weight % of charged 2D material, such as 8.5 weight %, 9 weight % or 10 weight % of charged 2D material.
48. The coated electrode of any one of the preceding examples, wherein the first and second coating layers allow penetration of photons across the thickness of the electrode.
49. A primary or secondary energy storage device, or an electrochemical cell, comprising the coated electrode according to any one examples 1 to 48.
50. The primary or secondary energy storage device, or the electrochemical cell, of example 49, further comprising at least one electrolyte, such as a liquid electrolyte, polymer electrolyte, solid electrolyte, or a mixture thereof.
51. The primary or secondary energy storage device, or the electrochemical cell, of example 49 or 50, further comprising at least one current collector.
52. The primary or secondary energy storage device, or the electrochemical cell, of any one of examples 49 to 51, wherein the coated electrode is a cathode.
53. The primary or secondary energy storage device, or the electrochemical cell, of any one of examples 49 to 52, further comprising an alkali metal, alkaline earth metal, aluminium metal or a metal alloy as anode and a porous separator disposed between the cathode and the anode.
54. A method for producing a coated electrode, comprising the steps of:
   (a) providing a porous sulfur substrate as electrode material;
   (b) forming a first continuous coating layer comprising a two-dimensional (2D) material on the sulfur substrate;
   (c) forming covalent bonds between the 2D material of the first coating layer and the sulfur substrate;
   (d) forming a second coating layer comprising a second 2D material on the first coating layer.
55. The method of example 54, wherein the first coating layer of step (b) is formed by dip coating, vacuum filtering, spray coating, spin-coating, bar coating, slot-die coating, roll-to-roll printing, screen-printing, flexographic printing, lithographic printing, ink-jet printing or film stretching.
56. The method of any one of examples 54 or 55, wherein the covalent bonds forming step (c) includes a ring-opening polymerization, such as a ring-opening polymerization driven by photons at certain frequencies and/or electrons accelerated to certain speeds.
57. The method of any one of examples 54 to 56, wherein the second coating layer of step (d) is formed by electrophoretic deposition of the second 2D material.
58. A method for producing a coated electrode, comprising the steps of:
   (a) providing a porous sulfur substrate as electrode material;
   (b) forming (i) a first continuous coating layer comprising a two-dimensional (2D) material on the sulfur substrate; and (ii) a second coating layer comprising a second 2D material on the first coating layer; by using electrostatic driven layer-by-layer assembly;
   (c) forming covalent bonds between the 2D material of the first coating layer and the sulfur substrate.
59. The method of any one of examples 54 to 58, wherein the first coating layer includes at least graphene oxide as 2D material.
60. The method of any one of examples 54 to 59, wherein the first coating layer is formed in a thickness of from 2 to 45 nm, such as from 5 to 35 nm, 8 to 25 nm, or 10 to 20 nm, such 10 nm, 15 nm or 20 nm.
61. The method of any one of examples 54 to 60, wherein the second coating layer is formed in a thickness of from 10 nm to 15 µm, such as from 50 nm to 15 µm, 0.5 to 14 µm, 2.5 to 13 µm, 5 to 12 µm, or 7.5 to 11 µm, such as 8, 9 or 10 µm.
62. The method of any one of examples 54 to 61, wherein the second coating layer includes at least one charged 2D material.
63. The method of any one of examples 54 to 62, further comprising the step of:
   (e) attaching a current collector to the coated electrode obtained by steps (a) to (d).

It should be noted that the description and drawings have an illustrative character only and are not intended to limit the scope of the disclosure, which is defined by the attached claims.

## Claims

1. An electrode and/or cathode stabilized by a transition layer, comprising:
(a) a porous chalcogenide-based electrode, more desirably sulfur, comprising of predominantly crystalline allotropes within the core;
(b) at least one of a glass, polymeric and amorphous chalcogenide, more desirably sulfur allotropes present within the transition layer and/or shell covering the surface of the active electrode material, the transition layer comprising of a two-dimensional (2D) material, covalently bonded between said 2D material and the chalcogenide, more desirably sulfur of the electrode material, and 12 weight % or less, based on the total weight of the coated electrode, of polymeric sulfur; and
(c) a coating layer on top of the transition layer said coating layer comprising a 2D material,
(d) a presence of density gradient between the crystalline core and glass/polymeric/amorphous shell,
(e) an electrode in which the volume of crystalline allotrope present within the inner voids represents a buffer volume utilized to compensate the volumetric fluctuation during battery cycling,
(f) a chalcogenide electrode, more desirably a sulfur-rich electrode, where the electrode active mass consists of binary and or ternary dopant such as selenium, tellurium having composition (SeₓS_{y}), (TeₓS_{y}), (TeₓS_{y}Se_{z}), wherein the mass content of sulfur in the cathode is above 50% per weight of the total chalcogenide content, wherein
(g) the coated electrode and/or cathode, comprising at least one sulfur allotrope that is doped with a chalcogenide, a halogen, or a mixture thereof, more desirably comprised from 0.001 to 50 weight % of the chalcogenide, halogen or mixture thereof, based on the total weight of the sulfur allotrope, such as 0.01 to 49 weight %, 0.1 to 45 weight %, 0.5 to 44 weight % or 0.75 to 43 weight %, such as 1 weight %, 1.5 weight % or 2 weight % of the chalcogenide, halogen or mixture thereof.

2. Electrode and/or cathode according to claim 1, wherein
a. The amorphous chalcogenide, more desirably sulfur shell is the product of photon and/or electron radiation-induced ring opening polymerization of crystalline chalcogenide allotropes, and
b. the transition layer is the product of photon and/or electron radiation passing through the transparent graphene oxide layer coated onto the crystalline allotrope of chalcogenide, more desirably sulfur core, wherein the photon and/or electron radiation induces the ROP of the chalcogenide, more desirably sulfur and in-situ reduction of graphene oxide to reduced graphene oxide,
c. the in-situ formed transition layer being covalently bonded to the surface of the chalcogenide active material, more desirably sulfur,
d. the transition layer being rich in negatively charged surface functional groups (for example: not limited to thiol, thioether, sulfoxide, sulfone, and sulfonic acid) resulting from the photon and/or electron induced ROP of chalcogenide, more desirably sulfur and de-oxygenation of graphene oxide to reduced graphene oxide, wherein the negatively charged surface acts as the polysulfide blocking interlayer.

3. The electrode and/or cathode according to claim 1 or 2, wherein the photon/electron radiationhaving at least one of the characteristics of: a wavelength of photon radiation being between 450 nm and 120 nm in regard to light/UV, and between 10⁻¹² m and 10⁻¹⁶ m in regard to gamma radiation, and an electron radiation energy of at least 5 MeV.

4. The electrode and/or cathode according to any of the preceding claims, wherein the covalent bond between the reduced graphene oxide containing transition layer and the amorphous chalcogenide, more desirably sulfur shell is the product of providing a gaseous and/or vapor and/or liquid co-monomer, penetrating the internal cavities of the chalcogenide electrodes, where under the influence of irradiation, a chalcogenide-rich co-polymer is formed together with the reduced graphene oxide containing transition layer.

5. The electrode and/or cathode of any one of the preceding claims, wherein the first coating layer and/or layers are permeable to cations, such as Li⁺, Na⁺, K⁺, Ca²⁺, Zn²⁺, Mg²⁺ Al³⁺, but not limited to and electronically conductive.

6. The electrode and/or cathode of any one of the preceding claims, wherein the 2D material of the first coating layer is functionalized with groups capable of reactions with the chalcogenide, more desirably sulfur, and/or decorated with metal nanoparticles, metal oxide nanoparticles, metal alloy nanoparticles, non-metal alloy nanoparticles, or a mixture of any of the foregoing, and/or
wherein the first coating layer has a thickness of from 0.3 to 500 nm, such as from 5 to 500 nm, 8 to 250 nm, or 10 to 200 nm, such 1nm, 10 nm, 100 nm, 150 nm or 200 nm wherein the second coating layer comprises of micro sheets of a 2D material, nanosheets of a 2D material, and/or charged 2D material and/or a mixture thereof.

7. The electrode and/or cathode according to any of the preceding claims, wherein a second 2D material layer, coating the electrode on top of the reduced graphene oxide containing transition layer is provided.

8. The electrode and/or cathode of any one of the preceding claims, wherein the layers are obtained by layer by layer assembly, optionally electrostatic driven layer-by-layer assembly, spin-coating, bar coating, slot-die coating, roll-to-roll printing, screen-printing, flexographic printing, lithographic printing, ink-jet printing or film stretching.

9. The electrode and/or cathode of any one of the preceding claims, wherein the 2D material of the second coating layer is selected from the group comprising carbon, graphene, graphene oxide, graphitic carbon nitride, hexagonal boron nitride, aluminum nitride, molybdenum nitride, titanium nitride, silicene, phosphorene, germanene, a transition metal dichalcogenide, a transition metal oxide, a transition metal carbide, a transition metal nitride, or a composite mixture of any two or more of any of the foregoing, wherein more desirably the second layer comprises of graphene and/or graphene oxide and/or a mixture of graphene oxide and reduced graphene oxide.

10. The electrode and/or cathode of any one of the preceding claims, wherein the second coating layer and/or layers are permeable to cations, such as Li⁺, Na⁺, K⁺, Ca²⁺, Zn²⁺, Mg²⁺ Al³⁺, but not limited to and/or electronically conductive.

11. The electrode and/or cathode of any one of the preceding claims, wherein the second coating layer has a thickness ranging from 0.3 nm to 15 µm, such as from 50 nm to 15 µm, 0.5 to 14 µm, 2.5 to 13 µm, 5 to 12 µm, or 7.5 to 11 µm, such as 8, 9 or 10 µm.

12. The electrode and/or cathode of any one of the preceding claims, wherein a part of the second coated transition layer is in direct contact with an electrolyte between electrodes and or in-direct mediated contact with catholyte present within the electrode and/or wherein a part of the second coating layer is in direct contact with a current collector.

13. The electrode and/or cathode of any one of the preceding claims, wherein the total thickness of the first and second coating layer is ranging from 0.3 nm to 15 µm, such as from 0.5 µm to 15 µm, such as from 2.5 to 14 µm, 5 to 13 µm, or 7.5 to 12 µm, such as 8, 9 or 10 µm, more desirably 10 to 200 nm.

14. Method of producing an electrode and/or cathode, comprising the steps of
a. providing a crystalline chalcogenide allotrope core, more desirably sulfur core,
b. forming a first photon/electron radiation transparent, graphene oxide comprising, material coating layer on the surface of the electrode and/or cathode,
c. exposing the electrode to photon and/or electron radiation, inducing ring opening polymerization of crystalline sulfur, creating an amorphous sulfur shell on the crystalline sulfur core, wherein graphene oxide reacts via photon and/or electron radiation induced ring opening polymerization of crystalline sulfur by in-situ reduction de-oxygenation to reduced graphene oxide, and
d. covalently bonding the reduced graphene oxide containing layer to the amorphous sulfur shell.

15. The method of producing an electrode and and/or or cathode according to claim 14, wherein the step of creating the covalent bond between the reduced graphene oxide containing transition layer and the amorphous chalcogenide shell, more desirably sulfur shell, is performed by providing a gaseous and/or vapor and/or liquid co-monomer, and using photon and/or electron radiation for converting crystalline sulfur at the GO and/or sulfur interface into sulfur-rich co-polymer and cross-linking the sulfur and/or sulfur allotrope of the electrode material with the reduced graphene oxide containing transition layer.

16. The method for producing an electrode and/or cathode according to claim 14 to 15, further comprising the step of coating the electrode with a second 2D material layer on top of the reduced graphene oxide containing transition layer.

17. The method of claim 14, wherein the first coating layer of step b is formed by dip coating, vacuum filtering, spray coating, layer by layer, spin-coating, bar coating, slot-die coating, roll-to-roll printing, screen-printing, flexographic printing, lithographic printing, ink-jet printing or film stretching.

18. The method of any one of claims 14 to 17, wherein the second coating layer is formed by electrophoretic deposition and/or reduction of the second 2D material.

19. A primary or secondary energy storage device, or an electrochemical cell, comprising the electrode according to anyone claims 1 to 13, and produced according to any of claims 13 to 18.

20. The primary or secondary energy storage device, or the electrochemical cell, of claim 14, further comprising at least one electrolyte, such as a liquid electrolyte, polymer electrolyte, gel electrolyte, solid electrolyte, catholyte, composite electrolyte and/or a mixture thereof.
